# EUROPEAN PATENT APPLICATION

(11) **EP 4 763 771 A2**
(43) Date of publication of application: **24.06.2026**
(21) Application number: 24913488.3
(22) Date of filing: 29.11.2024
(51) Int. Cl.: B65H 18/28, B65H 39/16, B65H 18/10, B65H 23/26, H01M 10/04, H01M 50/403

(54) **SEPARATOR WINDING ROLL, SEPARATOR WINDING ROLL MANUFACTURING METHOD, ELECTRODE ASSEMBLY MANUFACTURING APPARATUS, AND ELECTRODE ASSEMBLY MANUFACTURING METHOD**

(30) Priority: 27.12.2023 KR 20230193317
(71) Applicant: LG Energy Solution, Ltd., Seoul 07335 (KR)
(72) Inventor: SUNG, In-Hyouk, Daejeon 34122 (KR); KIM, Ji-Yeon, Daejeon 34122 (KR); BAE, Won-Sik, Daejeon 34122 (KR); SUNG, Dong-Wook, Daejeon 34122 (KR); SHIN, Jin-Young, Daejeon 34122 (KR)
(74) Representative: Hoffmann Eitle
(86) International application number: PCT/KR2024/019401
(87) International publication number: WO 2025/143595

(57) **Abstract**

An electrode assembly manufacturing apparatus includes: a wound separator in which two or more layers of separators are stacked and wound; a separator supply unit that individually separates and supplies the two or more layers of separators from the wound separator; a first electrode supply unit that supplies a first electrode; a second electrode supply unit that supplies a second electrode; and a winding unit that individually stacks and winds each separated separator, between the first electrode and the second electrode and on an outer side of the first electrode or the second electrode.

## Description

### TECHNICAL FIELD

The present disclosure relates to a wound separator, a wound separator manufacturing method, an electrode assembly manufacturing apparatus, and an electrode assembly manufacturing method.

This application is based on and claims priority from Korean Patent Application No. 10-2023-0193317 filed on December 27, 2023 with the Korean Intellectual Property Office, the disclosure of which is incorporated herein in its entirety by reference.

### BACKGROUND ART

As technology development and demand for mobile devices increase, the demand for secondary batteries as an energy source is rapidly increasing. For example, secondary batteries are receiving much attention as an energy source not only for mobile devices such as cell phones, digital cameras, laptops, and wearable devices, but also for power devices such as electric bicycles, electric vehicles (EVs), and hybrid electric vehicles (HEVs).

Depending on the shape of the battery case, secondary batteries are classified into cylindrical batteries in which the electrode assembly is built into a cylindrical metal can, square batteries in which the electrode assembly is built into a square metal can, and pouch-type batteries in which the electrode assembly is built into a pouch-type case made of aluminum laminate sheet. Among the secondary batteries, the cylindrical batteries have advantages of relatively large capacity and structural stability over other types of batteries.

### DISCLOSURE

### TECHINCAL PROBLEM

The present disclosure provides a novel separator in which two or more layers of separators are stacked and wound.

The present disclosure provides a method of manufacturing a separator in which two or more layers of separators are stacked and wound.

The present disclosure provides an electrode assembly manufacturing apparatus having a simplified process structure by including one separator supply unit using a novel wound separator in which two or more layers of separators are stacked and wound.

The present disclosure provides a method of manufacturing an electrode assembly having a simplified process structure by including one separator supply unit using a novel wound separator in which two or more layers of separators are stacked and wound.

### Technical Solution

According to one aspect of the present disclosure, a wound separator, an electrode assembly manufacturing apparatus, and an electrode assembly manufacturing method of the following embodiments are provided.

According to a first embodiment, a wound separator includes two or more layers of separators stacked and wound.

According to a second embodiment, in the first embodiment, the two or more layers of separators may include a first separator and a second separator, and a winding length of the second separator may be longer than a winding length of the first separator.

According to a third embodiment, in the first or second embodiment, the two or more layers of separators may include a first separator and a second separator, and one end of winding ends of the first separator and the second separator may be wound to wrap over a remaining end so that the one end is unwound before the remaining end upon unwinding.

According to a fourth embodiment, in any one of the first to third embodiments, the two or more layers of separators may include a first separator and a second separator, the first separator may include a first porous polymer substrate and a first inorganic heat-resistant layer including first inorganic particles and a first binder polymer on at least one surface of the first porous polymer substrate, and the second separator may include a second porous polymer substrate and a second inorganic heat-resistant layer including second inorganic particles and a second binder polymer on at least one surface of the second porous polymer substrate.

According to a fifth embodiment, in the fourth embodiment, the wound separator may further includes an interlayer film on at least one of the first inorganic heat-resistant layer and the second inorganic heat-resistant layer.

According to a sixth embodiment, a method of manufacturing a wound separator is provided, which includes: introducing a first mixture including a first diluent and a first polymer resin into an extruder, followed by extrusion and cooling to obtain a first unstretched sheet; introducing a second mixture including a second diluent and a second polymer resin into an extruder, followed by extrusion and cooling to obtain a second unstretched sheet; stacking the first unstretched sheet and the second unstretched sheet to obtain an unstretched stacked sheet; first stretching the unstretched stacked sheet in a first direction to obtain a first stretched stacked sheet; second stretching the first stretched stacked sheet in a second direction to obtain a second stretched stacked sheet; extracting the first and second diluents from the second stretched stacked sheet to obtain a stacked separator in which a first separator and a second separator are stacked; and winding the stacked separator obtained in the extracting.

According to a seventh embodiment, in the sixth embodiment, the method may further include heat-setting the stacked separator.

According to an eighth embodiment, in the sixth or seventh embodiment, the first mixture may further include a first initiator and a first crosslinking agent, the second mixture may further include a second initiator and a second crosslinking agent, and the method may further include crosslinking the stacked separator from which the first and second diluents are extracted.

According to a ninth embodiment, a method of manufacturing a wound separator is provided, which includes: introducing a third mixture including a third diluent and a third polymer resin into an extruder, followed by extrusion and cooling to obtain a third unstretched sheet; introducing a fourth mixture including a fourth diluent and a fourth polymer resin into an extruder, followed by extrusion and cooling to obtain a fourth unstretched sheet; first stretching the third unstretched sheet and the fourth sheet, respectively, in a first direction to obtain a first stretched third sheet and a first stretched fourth sheet; second stretching the first stretched third sheet and the first stretched fourth sheet, respectively, in a second direction to obtain a second stretched third sheet and a second stretched fourth sheet; extracting the third diluent and the fourth diluent from the second stretched third sheet and the second stretched fourth sheet, respectively, to obtain a third porous polymer substrate and a fourth porous polymer substrate; applying and drying a third inorganic heat-resistant layer-forming slurry including third inorganic particles and a third binder polymer on at least one surface of the third porous polymer substrate to form a third inorganic heat-resistant layer; applying and drying a fourth inorganic heat-resistant layer-forming slurry including fourth inorganic particles and a fourth binder polymer on at least one surface of the fourth porous polymer substrate to form a fourth inorganic heat-resistant layer; and stacking and winding the third porous polymer substrate on which the third inorganic heat-resistant layer is formed and the fourth porous polymer substrate on which the fourth inorganic heat-resistant layer is formed.

According to a tenth embodiment, in the ninth embodiment, the method may further include heat-setting the third porous polymer substrate and the fourth porous polymer substrate from which the third diluent and the fourth diluent are extracted, respectively.

According to an eleventh embodiment, in the ninth or tenth embodiment, the third mixture may further include a third initiator and a third crosslinking agent, the fourth mixture may further include a fourth initiator and a fourth crosslinking agent, and the method may further include crosslinking the third porous polymer substrate and the fourth porous polymer substrate from which the third diluent and the fourth diluent are extracted, respectively.

According to a twelfth embodiment, in any one of the ninth to eleventh embodiments, the stacking and winding may include further stacking an interlayer film on at least one of the third inorganic heat-resistant layer and the fourth inorganic heat-resistant layer, followed by winding.

According to a thirteenth embodiment, an electrode assembly manufacturing apparatus includes: a wound separator in which two or more layers of separators are stacked and wound; a separator supply unit that individually separates and supply the two or more layers of separators from the wound separator; a first electrode supply unit that supplies a first electrode; a second electrode supply unit that supplies a second electrode; and a winding unit that individually stacks and winds each separator separated and supplied by the separator supply unit, between the first electrode and the second electrode and on an outer side of the first electrode or the second electrode.

According to a fourteenth embodiment, in the thirteenth embodiment, the two or more layers of separators stacked on the wound separator may include a first separator and a second separator, and a winding length of the second separator may be longer than a winding length of the first separator.

According to a fifteenth embodiment, in the thirteenth or fourteenth embodiment, the two or more layers of separators stacked on the wound separator may include a first separator and a second separator, and one end of winding ends of the first separator and the second separator may be wound to wrap over a remaining end so that the one end is unwound before the remaining end upon unwinding.

According to a sixteenth embodiment, in the thirteenth or fifteenth embodiment, the two or more layers of separators stacked on the wound separator may include a first separator and a second separator, and the winding unit may sequentially stack and wind the first electrode, the first separator, the second electrode, and the second separator.

According to a seventeenth embodiment, in the sixteenth embodiment, the electrode assembly manufacturing apparatus may further includes: at least one first guide roller that supplies the first separator supplied by unwinding the wound separator, to a gap between the first electrode and the second electrode; and at least one second guide roller that supplies the second separator supplied by unwinding the wound separator, in a direction opposite to one surface of one of the first electrode and the second electrode.

According to an eighteenth embodiment, in the seventeenth embodiment, the at least one second guide roller may be arranged such that a second separator supply path extending from the separator supply unit to the winding unit bypasses the first electrode supply unit or the second electrode supply unit.

According to a nineteenth embodiment, in any one of the sixteenth to eighteenth embodiments, a winding length of the second separator may be longer than a winding length of the first separator.

According to a twentieth embodiment, in any one of the sixteenth to nineteenth embodiments, a winding length of the second separator may be longer than a winding length of the first separator, and a difference between the winding length of the second separator and the winding length of the first separator is equal to or longer than a difference between a length of the second separator supply path extending from the separator supply unit to the winding unit and a length of a first separator supply path extending from the separator supply unit to the winding unit.

According to a twenty-first embodiment, a method of manufacturing an electrode assembly is provided, which includes: separating two or more layers of separators individually from a wound separator in which two or more layers of separators are stacked and wound; supplying the separators individually separated in the separating; supplying a first electrode; supplying a second electrode; and stacking and winding the separators individually separated in the separating, between the first electrode and the second electrode and on an outer side of the first electrode or the second electrode, respectively.

According to a twenty-second embodiment, in the twenty-first embodiment, the supplying the separator, the supplying the first electrode, the supplying the second electrode, and the stacking and winding the separators may be performed simultaneously after the separating the two or more layers of separators.

According to a twenty-third embodiment, in the twenty-first or twenty-second embodiment, the two or more layers of separators may include a first separator and a second separator, and in the stacking and winding the separators, the first electrode, the first separator, the second electrode, and the second separator may be sequentially stacked and wound.

According to a twenty-fourth embodiment, in the twenty-third embodiment, a winding length of the second separator may be longer than a winding length of the first separator.

According to a twenty-fifth embodiment, in the twenty-third or twenty-fourth embodiment, the separating the two or more layers of separators may be performed using a separator supply, and the stacking and winding the separators may be performed using a winding unit, a winding length of the second separator may be longer than a winding length of the first separator, and a difference between the winding length of the second separator and the winding length of the first separator may be equal to or longer than a difference between a length of the second separator supply path extending from the separator supply unit to the winding unit and a length of a first separator supply path extending from the separator supply unit to the winding unit.

According to a twenty-sixth embodiment, a method of manufacturing an electrode assembly is provided, which includes: sequentially stacking and winding a first electrode, a first separator, a second electrode, and a second separator in one direction while supplying the first electrode, the first separator, the second electrode, and the second separator in a roll-to-roll manner, in which the first separator and the second separator are wound on one roll in an overlapped manner, and then unwound and supplied in a single sheet.

### Advantageous Effects

Since the wound separator of the present disclosure is wound by stacking two or more layers of separators, each separator may be provided as a single sheet to different paths of an electrode assembly manufacturing apparatus.

In the wound separator manufacturing method of the present disclosure, an unstretched sheet is prepared using a diluent and a polymer resin, and a plurality of unstretched sheets is stacked and simultaneously stretched. Therefore, it is possible to provide a wound separator manufacturing method with a simplified process procedure.

Since the electrode assembly manufacturing apparatus of the present disclosure uses one separator supply unit, only one wound separator replacement is required when the separator is exhausted, so that maintenance of the electrode assembly manufacturing apparatus may be advantageous.

In addition, since the electrode assembly manufacturing apparatus of the present disclosure includes only one separator supply unit, the process structure of the electrode assembly manufacturing apparatus may be simplified. For example, the supply paths of the negative electrode, positive electrode, and separator in the electrode assembly manufacturing apparatus of the present disclosure be simplified compared to the conventional ones.

The electrode assembly manufacturing method of the present disclosure utilizes a wound separator in which two or more layers of separators are stacked and wound, which simplifies the process procedure. Furthermore, the electrode assembly manufacturing method of the present disclosure enables a continuous process by replacing the wound separator once when the separator is exhausted.

### DESCRIPTION OF DRAWINGS

The following drawings attached hereto exemplify embodiments of the present disclosure and serve to further understand the technical idea of the present disclosure together with the content of the disclosure described above. Therefore, the present disclosure should not be construed as being limited to the matters illustrated in the drawings.
FIG. 1 schematically illustrates the structure of a wound separator according to one embodiment of the present disclosure.
FIG. 2 schematically illustrates the structure of a wound separator according to another embodiment of the present disclosure.
FIG. 3 schematically illustrates the structure of an electrode assembly manufacturing apparatus according to one embodiment of the present disclosure.
FIG. 4 schematically illustrates the structure of an electrode assembly manufacturing apparatus according to another embodiment of the present disclosure.
FIG. 5 schematically illustrates the structure of an electrode assembly manufacturing apparatus according to still another embodiment of the present disclosure.
FIG. 6 is a flowchart of an electrode assembly manufacturing method according to one embodiment of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### BEST MODE

Words and terms used in the detailed description and the claims herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.

The terms used herein are only used to describe exemplary embodiments and are not intended to limit the present disclosure. Singular expressions include plural expressions unless the context clearly indicates otherwise.

### <Definition>

Throughout this specification, when a part is said to "include" a component, this does not exclude other components, but rather includes other components, unless otherwise specifically stated.

Throughout the specification, when a layer is said to be located on "one surface" or "one side" of another layer, this includes not only cases where the layer is in contact with one surface of the other layer, but also cases where there is another layer between the two layers.

Hereinafter, with reference to the attached drawings, embodiments of the present disclosure are described in detail to enable one of ordinary skill in the art to which the present disclosure belongs, to easily practice the present disclosure. However, the present disclosure may be implemented in many different forms and is not limited to the embodiments described herein. In addition, in order to clearly describe the present disclosure in the drawings, parts not pertinent to the description are omitted, and similar parts are designated by similar drawing reference numerals throughout the specification.

The electrode assembly built into the battery case is a rechargeable power plant made up of a stacked structure of a positive electrode, a separator, and a negative electrode, and is classified into a jelly-roll type, a stack type, and a stack/folding type. The jelly-roll type is a form in which a separator is interposed between long sheet-shaped positive and negative electrodes coated with active materials, and wound, while the stack type is a form in which a plurality of positive and negative electrodes of a predetermined size are sequentially stacked with a separator interposed therebetween. The stack/folding type is a composite structure of the jelly-roll type and the stack type. Among them, the jelly-roll type electrode assembly has advantages of being easy to manufacture and having a high energy density per weight.

Meanwhile, the jelly-roll type electrode assembly is formed by stacking a negative electrode, a separator on the negative electrode, a positive electrode on the separator, and a separator on the positive electrode, and for this purpose, a winding apparatus including one negative electrode supply unit, one negative electrode supply unit, and two separator supply units is usually required. Each supply unit of the winding apparatus is equipped with winding rolls on which the negative electrode, the positive electrode, and the separators are respectively wound in sheet form. When the material from any one of the four winding rolls is exhausted or a process problem occurs, the winding process of the electrode assembly must be stopped, which has a disadvantage of requiring two winding roll changes, especially for the separators, because there are two winding rolls. In addition, since the winding apparatus must include one negative electrode supply unit, one positive electrode supply unit, and two separator supply units, the paths of the negative electrode, the positive electrode, and the separators and the structure of the winding apparatus are complicated, and maintenance is unfavorable.

In view of the circumstances, the present disclosure adopts a single separator supply unit, and thus, provides a jelly-roll type electrode assembly manufacturing apparatus that is more advantageous for maintenance by including, and an electrode assembly manufacturing method that simplifies the process procedure.

### <Wound separator>

The present disclosure provides a wound separator (hereinafter, also referred to as a "separator winding roll") according to one embodiment. The term "separator winding roll" and "wound separator" are interchangeably used throughout the specification.

According to one aspect of the present disclosure, a separator winding roll is provided, in which two or more layers of separators are stacked and wound. The number of layers of separators in the separator winding roll of the present disclosure need only be two or more layers, and there is no particular limitation on the number of layers of separators.

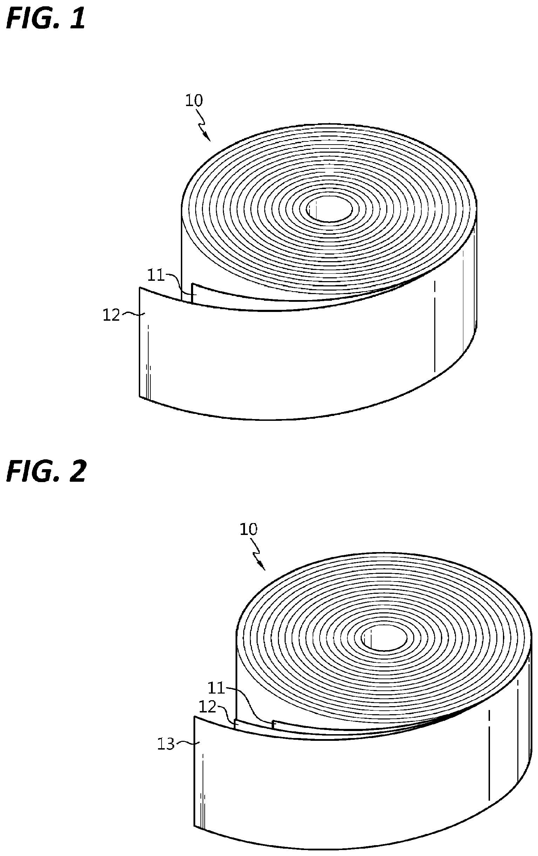

FIG. 1 schematically illustrates the structure of a separator winding roll according to one embodiment of the present disclosure. FIG. 2 schematically illustrates the structure of a separator winding roll according to another embodiment of the present disclosure.

In one embodiment of the present disclosure, the separator winding roll 10 may include a first separator 11, and a second separator 12, as illustrated in FIG. 1, wherein the two layers of separators 11, 12 are stacked and wound into a single roll. In this case, the first separator 11 may refer to a separator positioned closer to the center of the separator winding roll 10 than the second separator 12. The separator winding roll 10 may have two layers of separators 11 and 12 stacked thereon, so that one separator winding roll 10 may be utilized to provide each of the separators 11 and 12 in a single sheet for different paths in the electrode assembly manufacturing apparatus 100.

In one embodiment of the present disclosure, the winding length of the first separator 11 and the winding length of the second separator 12 may be the same as each other. Alternatively, the winding length of the second separator 12 may be longer than the winding length of the first separator 11. In this case, the "winding length" means the total length in the longitudinal direction of the separator wound on the separator winding roll 10.

In one embodiment of the present disclosure, when the winding length of the first separator 11 and the winding length of the second separator 12 are the same, either the first separator 11 or the second separator 12 may be exhausted first, but there is an advantage of facilitating storage of the separator winding roll 10.

In one embodiment of the present disclosure, when the winding length of the second separator 12 is longer than the winding length of the first separator 11, the first separator 11 and the second separator 12 may be naturally separated without the aid of a separate device. The difference between the winding length of the second separator 12 and the winding length of the first separator 11 may be adjusted to suit the purpose depending on the electrode assembly manufacturing device 100 in which the separator winding roll 10 is used.

In one embodiment of the present disclosure, when unwinding the separator winding roll 10, the first separator 11 and the second separator 12 may be unwound simultaneously, or one of the first separator 11 and the second separator 12 may be unwound before the other.

In one embodiment of the present disclosure, the wound ends of the first separator 11 and the second separator 12 may be overlapped at the same location. As another example, one of the wound ends of the first separator 11 and the second separator 12 may be wound to wrap over the other.

As illustrated in FIG. 1, the second separator 12 may be wound to wrap beyond the first separator 11 so that the second separator 12 is unwound before the first separator 11 upon unwinding. By the method as described above, the two or more layers of the separators 11 and 12 may be naturally separated into the first separator 11 and the second separator 12 without the aid of a separate device.

Meanwhile, the separator winding roll 10 of the present disclosure may include a first separator 11, a second separator 12, and a third separator 13, as illustrated in FIG. 2, and these three layers of separators 11, 12, and 13 may be stacked and wound into a single roll. In this case, the first separator 11 may refer to a separator positioned closer to the center of the separator winding roll 10 than the second separator 12 and the third separator 13. Further, the second separator 12 may refer to a separator positioned closer to the center of the separator winding roll 10 than the third separator 13. As illustrated in FIG. 2, the present disclosure is a separator winding roll 10 in which a plurality of separators are stacked and wound, and while FIG. 2 illustrates only three layers of separators 11, 12, and 13 stacked by way of example, the number of stacked separators may be increased without limitation. Meanwhile, as used herein, a separator in which two or more separators are stacked is also referred to as a "nested wound separator."

In one embodiment of the present disclosure, the separator may have a winding length of about 100 m to 10,000 m, 1,000 m to 7,000 m, or 2,000 m to 5,000 m.

In one embodiment of the present disclosure, the separator winding roll may have two or more layers of separators wound on a bobbin, but the separator winding roll may not include the bobbin.

In one embodiment of the present disclosure, each of two or more layers of separators wound around the separator winding roll may include a porous polymer substrate.

In the present specification, when the separator includes only a porous polymer substrate, the separator and the porous polymer substrate may be used as the same. Meanwhile, when the separator includes an inorganic heat-resistant layer on the porous polymer substrate, the separator may include a porous polymer substrate and an inorganic heat-resistant layer.

In one embodiment of the present disclosure, the porous polymer substrate refers to a substrate having a plurality of pores formed therein as a porous ion-conducting barrier that allows ions to pass while blocking electrical contact between the negative electrode and the positive electrode. The pores are structured to be interconnected with each other, so that gas or liquid is able to pass from one side of the substrate to the other side.

In one embodiment of the present disclosure, the porous polymer substrate may be, for example, a porous polymer film substrate or a porous polymer non-woven fabric substrate.

The material constituting the porous polymer substrate may be any organic or inorganic material having electrical insulation. From the viewpoint of imparting a shutdown function to the porous polymer substrate, a thermoplastic resin may be as the constituent material of the porous polymer substrate. The shutdown function refers to a function in which, when the battery temperature rises, the thermoplastic resin melts and closes the pores of the porous substrate, thereby blocking the movement of ions and suppressing thermal runaway of the battery.

The porous polymer substrate may be a porous polymer substrate made of polyolefin such as polyethylene or polypropylene, and the polyolefin porous polymer substrate exhibits a shutdown function at a temperature of, for example, 80 °C to 130 °C.

The polyolefin porous polymer substrate may be formed into a polymer by using polyethylene such as high-density polyethylene, linear low-density polyethylene, low-density polyethylene, or ultra-high molecular weight polyethylene, polypropylene, polybutylene, or polypentene, either alone or in mixture of two or more thereof.

Further, the porous polymer substrate may be prepared by forming into a film shape using various polymers such as polyester in addition to polyolefin. In addition, the porous polymer substrate may be formed as a structure in which two or more layers of porous polymer substrates are stacked, and each layer may be formed from a polymer such as the aforementioned polyolefin, polyester, or other polymer either alone or in mixture of two or more thereof.

In addition, the porous polymer substrate may be formed of, in addition to the aforementioned polyolefin-based materials, polyethylene terephthalate, polybutylene terephthalate, polyester, polyacetal, polyamide, polycarbonate, polyimide, polyether ether ketone, polyether sulfone, polyphenylene oxide, polyphenylene sulfide, polyethylene naphthalene, polyphenylene oxide, polyphenylene oxide, polyphenylene sulfide, or polyethylene naphthalene, either alone or in mixtures thereof.

The thickness of the porous polymer substrate is not particularly limited, but may be about 1 µm to 100 µm, or about 5 µm to 50 µm. Also, the pore size and pore content present in the porous polymer substrate are not particularly limited, but may be about 0.01 µm to 50 µm and about 10% to 95%, respectively.

As used herein, the words "about," "approximately," and "substantially" are intended to mean at or near the range of values or degrees to account for inherent manufacturing and material tolerances.

In one embodiment of the present disclosure, the weight average molecular weight of the polyolefin may be 100,000 to 5,000,000. When the weight average molecular weight is less than 100,000, it may be difficult to secure sufficient mechanical properties. In addition, when the weight average molecular weight exceeds 5,000,000, the shutdown characteristics may deteriorate or molding may become difficult. In addition, the puncture strength of the porous polymer substrate may be 300 gf or more from the viewpoint of improving the manufacturing yield. The puncture strength of the porous substrate refers to the maximum puncture load (gf) measured by performing a puncture test under the conditions of a needle tip curvature radius of 0.5 mm and a puncture speed of 4 mm/sec using a Kato tech KES-G5 handy compression tester.

In one embodiment of the present disclosure, when the separator includes only the porous polymer substrate, even though two or more layers of separators are stacked and wound, the separators does not adhere to each other, so that the separators are able to be naturally separated without a separate force or device when separated into individual sheets. Accordingly, when the separator having two or more layers of separators is wound overlappingly, an interlayer film such as a release paper is not required to separate the two or more layers of separators, thereby providing a process advantage.

Meanwhile, in one embodiment of the present disclosure, the separator may optionally include an inorganic heat-resistant layer on at least one surface of the porous polymer substrate, i.e., the separator. The inorganic heat-resistant layer may include inorganic particles and a binder polymer.

For example, the two or more layers of separators may include a first separator and a second separator, the first separator may include a first porous polymer substrate and a first inorganic heat-resistant layer including first inorganic particles and a first binder polymer on at least one surface of the first porous polymer substrate, and the second separator may include a second porous polymer substrate and a second inorganic heat-resistant layer including second inorganic particles and a second binder polymer on at least one surface of the second porous polymer substrate.

In one embodiment of the present disclosure, the first binder polymer and the second binder polymer (hereinafter, also referred to as a binder polymer) are able to play a role of connecting and fixing inorganic particles within the inorganic heat-resistant layer.

In one embodiment of the present disclosure, the binder polymer may include a particulate binder polymer or a non-particulate binder polymer. The "particulate" binder polymer may refer to a binder polymer that is added to a dispersion medium in a particulate form, and retains the added particulate shape after being coated and dried. The "non-particulate" binder polymer may refer to a binder polymer that is coated and dried in a form dissolved in a solvent when forming an inorganic heat-resistant layer, or added to a dispersion medium in a particulate form, but does not retain the particulate form by coating and drying.

In one embodiment of the present disclosure, non-limiting examples of the binder polymer include polyvinylidene fluoride, polyvinylidene fluoride-co-hexafluoropropylene, polyvinylidene fluoride-co-trichloroethylene, polymethyl methacrylate, polybutyl acrylate, polybutyl methacrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, polyacrylic acid, and carboxyl methyl cellulose, but not limited thereto,

In one embodiment of the present disclosure, the first binder polymer and the second binder polymer may be the same or different. For example, since the first binder polymer and the second binder polymer have different types depending on the electrode facing, the negative electrode-separator adhesion and the positive electrode-separator adhesion may be controlled.

According to one embodiment of the present disclosure, the binder polymer may be divided into a dispersant binder polymer that also functions as a dispersant, and a non-dispersant binder polymer. The dispersant binder polymer is a polymer having at least one dispersion-contributing functional group in the main chain or side chain of the polymer, and the dispersion-contributing functional group may be, for example, an OH group or a CN group. Examples of such dispersant binder polymers include cellulose acetate, cellulose acetate butyrate, cellulose acetate propionate, cyanoethylpullulan, cyanoethylpolyvinylalcohol, cyanoethylcellulose, cyanoethylsucrose, and pullulan, carboxyl methyl cellulose. The non-dispersant binder polymers may include examples of the binder polymers excluding dispersant binder polymers.

The inorganic particles are not particularly limited as long as they are electrochemically stable. For example, the inorganic particles that may be used herein are not particularly limited as long as they do not undergo oxidation and/or reduction reactions in the operating voltage range of the applied electrochemical device (*e.g*., 0 V to 5 V based on Li/Li⁺). In particular, the use of inorganic particles having a high permittivity may contribute to an increase in the dissociation of electrolyte salts, such as lithium salts, in the liquid electrolyte, thereby improving the ionic conductivity of the electrolyte.

Non-limiting examples of the inorganic particles include high-permittivity inorganic particles having a dielectric constant of about 5 or more, or about 10 or more, inorganic particles having lithium ion transport capability, or mixtures thereof.

Non-limiting examples of the inorganic particles having a dielectric constant of 5 or more include BaTiO₃, Pb(Zr,Ti)O₃ (PZT), Pb₁₋ₓLaₓZr_{1-y}Ti_{y}O₃ (PLZT), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, SiC, AlO(OH), and Al₂O₃·H₂O, or a mixture thereof.

The inorganic particles having a lithium ion transport capacity refers to inorganic particles that contain the lithium element and have an ability of transferring lithium ions without storing lithium. Non-limiting examples of the inorganic particles having a lithium ion transport capability include lithium phosphate (Li₃PO₄), lithium titanate (LiₓTi_{y}(PO₄)₃, 0<x<2, 0<y<3), lithium aluminum titanate (LiₓAl_{y}Ti_{z}(PO₄)₃, 0<x<2, 0<y<1, 0<z<3), (LiAlTiP)ₓO_{y} series glasses (0<x<4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, w<5) such as Li_{3.25}Ge_{0.25}P_{0.75}S₄, lithium nitride (LiₓN_{y}, 0<x<4, 0<y<2) such as Li₃N, SiS₂ series glasses (LiₓSi_{y}S_{z}, 0<x<3, 0<y<2, 0<z<4) such as Li₃PO₄-Li₂S-SiS₂, and P₂S₅ series glasses (LiₓP_{y}S_{z}, 0<x<3, 0<y<3, 0<z<7) such as LiI-Li₂S-P₂S₅, or a mixture thereof.

The thickness of the inorganic heat-resistant layer is not particularly limited, but may be about 1 µm to 10 µm, or about 1.5 µm to 6 µm, and the porosity of the above-mentioned inorganic heat-resistant layer is also not particularly limited, but may be about 35% to 65%.

In one embodiment of the present disclosure, the content of the inorganic particles may be about 80 wt% to 95 wt%, 85 wt% to 93 wt%, or 90 wt% to 92 wt% based on 100 wt% of the inorganic heat-resistant layer. When the content of the inorganic particles satisfies the above range, the inorganic heat-resistant layer may have a high density, and the porosity and resistance characteristics of the separator may be excellent.

In one embodiment of the present disclosure, the content of the binder polymer may be about 5 wt% to 20 wt% or 10 wt% to 15 wt% based on 100 wt% of the inorganic heat-resistant layer. When the content of the binder polymer satisfies the above range, the heat resistance of the separator may be excellent without causing detachment of inorganic particles in the inorganic heat-resistant layer.

Meanwhile, in the case where the inorganic heat-resistant layer is formed on the separator, an interlayer film may be further included on at least one of the first inorganic heat-resistant layer and the second inorganic heat-resistant layer. For example, an interlayer film may be included between the first inorganic heat-resistant layer and the second inorganic heat-resistant layer, an interlayer film may be included between the first inorganic heat-resistant layer and the second porous polymer substrate, and an interlayer film may be included between the second inorganic heat-resistant layer and the first porous polymer substrate.

In one embodiment of the present disclosure, depending on the content of the binder polymer in the inorganic heat-resistant layer, the binder polymer may exist inside the inorganic heat-resistant layer to bind the inorganic particles, while the binder may exist on the surface of the inorganic heat-resistant layer. In this case, it may be difficult to separately supply the first separator and the second separator, and therefore, in such a case, an interlayer film may be further included on at least one of the first inorganic heat-resistant layer and the second inorganic heat-resistant layer, to facilitate the separation of the first separator and the second separator.

In one embodiment of the present disclosure, the interlayer film is also referred to as a release film, and the interlayer film is not limited in type, but may be, for example, a PET film.

### <Manufacturing Method of Separator Winding Roll>

The present disclosure provides a method of manufacturing a separator winding roll according to one embodiment.

According to an aspect of the present disclosure, a method of manufacturing a separator winding roll is provided, which includes: introducing a first mixture including a first diluent and a first polymer resin into an extruder, followed by extrusion and cooling to obtain a first unstretched sheet; introducing a second mixture including a second diluent and a second polymer resin into an extruder, followed by extrusion and cooling to obtain a second unstretched sheet; stacking the first unstretched sheet and the second unstretched sheet to obtain an unstretched stacked sheet; first stretching the unstretched stacked sheet in a first direction to obtain a first stretched stacked sheet; second stretching the first stretched stacked sheet in a second direction to obtain a second stretched stacked sheet; extracting the first and second diluents from the second stretched stacked sheet to obtain a stacked separator in which a first separator and a second separator are stacked; and winding the stacked separator obtained in the extracting.

Hereinafter, the method of manufacturing the separator winding roll is described in detail.

First, a first mixture of a first diluent and a first polymer resin is introduced into an extruder, followed by extrusion and cooling to obtain a first unstretched sheet, and a second mixture of a second diluent and a second polymer resin is introduced into an extruder, followed by extrusion and cooling to obtain a second unstretched sheet.

In one embodiment of the present disclosure, the materials of the first polymer resin and the second polymer resin may include polyethylene such as high-density polyethylene, linear low-density polyethylene, low-density polyethylene, and ultra-high molecular weight polyethylene, polypropylene, polybutylene, polypentene, polyester, polyethylene terephthalate, polybutylene terephthalate, polyester, polyacetal, polyamide, polycarbonate, polyimide, polyether ether ketone, polyether sulfone, polyphenylene oxide, polyphenylene sulfide, polyethylene naphthalene, or a mixture of two or more thereof. The first polymer resin and the second polymer resin may each include polyethylene, such as high-density polyethylene, linear low-density polyethylene, low-density polyethylene, ultra-high molecular weight polyethylene, polypropylene, polybutylene, polypentene, or a mixture thereof.

In one embodiment of the present disclosure, the first and second diluents may each be diluents generally used in the manufacture of wet separators, and examples thereof include: liquid or solid paraffin oil, wax, soybean oil; phthalic acid esters such as dibutyl phthalate, dihexyl phthalate, and dioctyl phthalate; aromatic ethers such as diphenyl ether and benzyl ether; fatty acids having 10 to 20 carbon atoms such as palmitic acid, stearic acid, oleic acid, linoleic acid, and linolenic acid; fatty acid alcohols having 10 to 20 carbon atoms such as palmitic alcohol, stearic alcohol, and oleic alcohol; fatty acid esters in which saturated and unsaturated fatty acids having 4 to 26 carbon atoms in the fatty acid group, or one or more double bonds of unsaturated fatty acids substituted with epoxy, are ester-bonded with an alcohol having 1 to 8 hydroxyl groups and 1 to 10 carbon atoms, such as palmitic acid mono-, di-, or triester, stearic acid mono-, di-, or triester, oleic acid mono-, di-, or triester, and linoleic acid mono-, di-, or triester; but is not limited thereto. The diluent may be used either alone or as a mixture containing at least two or more of the above-mentioned components.

In one embodiment of the present disclosure, the content of the first diluent or the second diluent may be added in a conventionally added content, and may be 100 parts by weight to 350 parts by weight, or 125 parts by weight to 300 parts by weight, or 150 parts by weight to 250 parts by weight based on 100 parts by weight of the first mixture or the second mixture, but is not limited thereto.

In one embodiment of the present disclosure, the first mixture and the second mixture may further contain, in addition to a diluent, other general additives for improving specific functions, such as an antioxidant, an initiator, a crosslinking agent, a crosslinking catalyst, a surfactant, a UV stabilizer, an antistatic agent, and a nucleating agent.

In one embodiment of the present disclosure, the extruder may be a single-screw extruder or a twin-screw extruder, and a T-die is provided as a discharge portion. When a T-die is used as a discharge portion, a separator with excellent thickness uniformity may be obtained. After each of the first mixture and the second mixture is introduced into the extruder, a molten composition may be obtained by melting the polymer resin at a high temperature while mixing.

Thereafter, the first and second mixtures, which are each molten, may be extruded through an extruder equipped with the T-die, and then subjected to a general casting or calendaring using water cooling or air cooling to obtain a sheet-shaped first and second unstretched sheets, respectively.

Meanwhile, phase separation of the polymer resin and the diluent may occur, as the extrudate is cooled through the cooling process.

Thereafter, the first unstretched sheet and the second unstretched sheet are stacked to obtain an unstretched stacked sheet. The first unstretched sheet and the second unstretched sheet may be physically piled and stacked.

In one embodiment of the present disclosure, the size of the first unstretched sheet and the size of the second unstretched sheet may be the same as or different from each other.

Then, the unstretched stacked sheet is first stretched in a first direction, and the first-stretched stacked sheet is second stretched in a second direction.

In one embodiment of the present disclosure, the first stretching and the second stretching may be performed, for example, simultaneously or sequentially in a roll manner or in a tenter manner.

In one embodiment of the present disclosure, the first direction and the second direction may be the same as or different from each other.

In addition, in one embodiment of the present disclosure, the first direction and the second direction may each independently be a direction parallel to the machine direction (MD) or the transverse direction (TD).

As used herein, the "machine direction" means a direction parallel to the running direction of the procedure (extrusion→molding→stretching...) in the manufacturing process of the separator. The machine direction may be identified through the fiber orientation direction of the polymer of the separator substrate, and the direction parallel to the fiber orientation direction is the machine direction.

Accordingly, the "transverse direction" means a direction orthogonal to the machine direction. The transverse direction may also be identified as a direction orthogonal to the fiber orientation direction of the polymer of the separator substrate.

In one embodiment of the present disclosure, generally, the first direction may be a direction parallel to the MD, and the second direction may be a direction parallel to the TD, but the present disclosure is not limited thereto.

In one embodiment of the present disclosure, the first direction may be a direction parallel to the TD, and the second direction may be a direction parallel to the MD.

In one embodiment of the present disclosure, the stretching ratio of the first stretching and the second stretching may be, for example, 3 times or more, or 5 to 12 times in the machine direction or the transverse direction, respectively, and the total stretching ratio may be 20 to 120 times. When the stretching ratio satisfies the above numerical range, there may be advantageous effects in terms of thickness uniformity of the manufactured separator substrate and the balance of physical properties between the longitudinal and transverse directions, but the present disclosure is not limited thereto.

In one embodiment of the present disclosure, the stretching temperature may vary depending on the melting point of the polymer resin used, and the concentration and type of the diluent, but the present disclosure is not limited thereto.

Next, the diluent is extracted from the second-stretched stacked sheet to obtain a stacked separator in which the first separator and the second separator are stacked.

In one embodiment of the present disclosure, the diluent may be extracted using an organic solvent. The organic solvent is not particularly limited as long as it is capable of extracting the diluent, but methyl ethyl ketone, methylene chloride, hexane, or a mixture of two or more thereof, which have high extraction efficiency and quick drying, may be suitable.

In one embodiment of the present disclosure, the extraction method may be any general solvent extraction method such as an immersion method, a solvent spray method, and an ultrasonic method, either individually or in combination. The content of the residual diluent after the extraction treatment may be 1 wt% or less based on 100 wt% of the obtained stacked separator to be manufactured. When the content of the residual diluent exceeds 1 wt%, the physical properties deteriorate, and the permeability of the separator decreases. The content of the residual diluent may be affected by the extraction temperature and extraction time, and in order to increase the solubility of the diluent and the organic solvent, it is desirable that the extraction temperature be high, but considering the safety issue due to boiling of the organic solvent, the extraction temperature may be 40 °C or lower. When the extraction temperature is lower than the solidification point of the diluent, the extraction efficiency decreases significantly. Therefore, the extraction temperature must be higher than the solidification point of the diluent.

In one embodiment of the present disclosure, a step of heat-fixing the stacked separator may be further included. The heat-fixing may mean applying heat to the separator, thereby fixing the separator, and forcibly holding the porous film that is about to shrink, thereby removing residual stress.

In one embodiment of the present disclosure, the heat-fixing temperature may be, for example, about 120 °C to 140 °C or 125 °C to 135 °C. When the heat-fixing temperature exceeds the upper limit, fracture of the porous polymer substrate occurs, and when the heat-fixing temperature is lower than the lower limit, stress relief of the porous polymer substrate may be insufficient.

Then, the obtained stacked separator is wound to obtain a separator winding roll.

In one embodiment of the present disclosure, the first mixture may further include a first initiator and a first crosslinking agent, the second mixture may further include a second initiator and a second crosslinking agent, and the method may further include crosslinking the stacked separator from which the diluent is extracted.

In one embodiment of the present disclosure, when the first polymer resin and the second polymer resin are each polyolefin, the crosslinking agent may be any crosslinking agent commonly used in manufacturing a polyolefin crosslinked separator. For example, the first crosslinking agent and the second crosslinking agent may each use, for example, a carbon-carbon double bond group-containing alkoxy silane compound that causes a silane crosslinking reaction. For example, the carbon-carbon double bond group-containing alkoxy silane compound is grafted onto the polyolefin by the carbon-carbon double bond group, and a crosslinking reaction is carried out by the alkoxy group to crosslink the polyolefin. Accordingly, the meltdown temperature of the separator may be increased.

The carbon-carbon double bond group is a reactive group capable of being grafted onto polyolefin as described above, and is a substituent having a double bond between two carbon atoms. Examples thereof include a vinyl group, an acryloxy group, or a methacryloxy group.

In one embodiment of the present disclosure, the carbon-carbon double bond group-containing alkoxy silane compound may include vinyltrimethoxysilane, vinyltriethoxysilane, vinyltriacetoxysilane, (3-methacryloxypropyl)trimethoxysilane, (3-methacryloxypropyl)triethoxysilane, vinylmethyldimethoxysilane, vinyl-tris(2-methoxyethoxy)silane, vinylmethyldiethoxysilane, or a mixture of at least two or more thereof.

In one embodiment of the present disclosure, the content of the first crosslinking agent may be about 0.1 wt% to 3.0 wt%, or 0.15 wt% to 2.0 wt%, or 0.2 wt% to 1.5 wt% based on 100 wt% of the first mixture.

In one embodiment of the present disclosure, the content of the second crosslinking agent may be about 0.1 wt% to 3.0 wt%, or 0.15 wt% to 2.0 wt%, or 0.2 wt% to 1.5 wt% based on 100 wt% of the second mixture.

In one embodiment of the present disclosure, the first initiator and the second initiator may be, without being limited, any initiators capable of generating radicals. The first initiator and the second initiator may be, for example, 2,5-dimethyl-2,5-di(tert-butylperoxy)hexane (DHBP), benzoyl peroxide, acetyl peroxide, dilauryl peroxide, di-tert-butyl peroxide, dicumyl peroxide, cumyl peroxide, hydrogen peroxide, potassium persulfate, or a combination thereof.

In one embodiment of the present disclosure, the content of the first initiator may be about 0.1 wt% to 20 wt%, or 0.5 wt% to 10 wt%, or 1 wt% to 5 wt% based on 100 wt% of the first crosslinking agent.

In one embodiment of the present disclosure, the content of the second crosslinking agent may be about 0.1 wt% to 20 wt%, or 0.5 wt% to 10 wt%, or 1 wt% to 5 wt% based on 100 wt% of the second crosslinking agent.

In one embodiment of the present disclosure, when the first mixture further includes the first initiator and the first crosslinking agent, and the second mixture further includes the second initiator and the second crosslinking agent, the stacked separator from which the diluent is extracted may be crosslinked after being heat-fixed.

In one embodiment of the present disclosure, the crosslinking may be water crosslinking, and the water crosslinking may be performed at 60 °C to 100 °C or 65 °C to 95 °C, or 70 °C to 90 °C. In a specific embodiment of the present disclosure, the water crosslinking may be performed at a humidity of 60% to 95% for 6 to 50 hours.

According to another aspect of the present disclosure, a method of manufacturing a separator winding roll is provided, which includes: introducing a third mixture including a third diluent and a third polymer resin into an extruder, followed by extrusion and cooling to obtain a third unstretched sheet; introducing a fourth mixture including a fourth diluent and a fourth polymer resin into an extruder, followed by extrusion and cooling to obtain a fourth unstretched sheet; first stretching the third unstretched sheet and the fourth sheet, respectively, in a first direction to obtain a first stretched third sheet and a first stretched fourth sheet; second stretching the first stretched third sheet and the first stretched fourth sheet, respectively, in a second direction to obtain a second stretched third sheet and a second stretched fourth sheet; extracting the third diluent and the fourth diluent from the second stretched third sheet and the second stretched fourth sheet, respectively, to obtain a third porous polymer substrate and a fourth porous polymer substrate; applying and drying a third inorganic heat-resistant layer-forming slurry including third inorganic particles and a third binder polymer on at least one surface of the third porous polymer substrate to form a third inorganic heat-resistant layer; applying and drying a fourth inorganic heat-resistant layer-forming slurry including fourth inorganic particles and a fourth binder polymer on at least one surface of the fourth porous polymer substrate to form a fourth inorganic heat-resistant layer; and stacking and winding the third porous polymer substrate on which the third inorganic heat-resistant layer is formed and the fourth porous polymer substrate on which the fourth inorganic heat-resistant layer is formed.

Hereinafter, the method of manufacturing the separator winding roll is described in detail.

First, a third mixture of a third diluent and a third polymer resin is introduced into an extruder, followed by extrusion and cooling to obtain a third unstretched sheet, and a fourth mixture of a fourth diluent and a fourth polymer resin is introduced into an extruder, followed by extrusion and cooling to obtain a fourth unstretched sheet.

The third diluent and the fourth diluent are the same as the first diluent and the second diluent, respectively, and are substituted for the aforementioned ones.

In addition, the third polymer resin and the fourth polymer resin are the same as the first polymer resin and the second polymer resin, respectively, and are substituted for the aforementioned ones.

Then, the third unstretched sheet and the fourth unstretched sheet are first stretched in the first direction, respectively, and the third and fourth sheets that have been first stretched are second stretched in the second direction, respectively.

The stretching step may be the same as described above.

Meanwhile, the stretching step may be performed by stacking the third unstretched sheet and the fourth unstretched sheet to obtain an unstretched stacked sheet, and then stretching the stacked sheet.

Thereafter, the third diluent and the fourth diluent are extracted from the second-stretched sheet to obtain the third porous polymer substrate and the fourth porous polymer substrate, respectively. The third diluent and the fourth diluent are the same as the first diluent and the second diluent, respectively, and are substituted for the aforementioned ones.

According to one embodiment of the present disclosure, the method may further include a step of heat-setting the third porous polymer substrate and the fourth porous polymer substrate from which the third diluent and the fourth diluent are extracted, respectively. The heat-setting step is as described above.

Thereafter, a third inorganic heat-resistant layer-forming slurry including third inorganic particles and a third binder polymer is applied and dried on at least one surface of the obtained third porous polymer substrate to form a third inorganic heat-resistant layer, and a fourth inorganic heat-resistant layer-forming slurry including fourth inorganic particles and a fourth binder polymer is applied and dried on at least one surface of the obtained fourth porous polymer substrate to form a fourth inorganic heat-resistant layer.

The third inorganic particle, the fourth inorganic particle, the third binder polymer, and the fourth binder polymer are substituted for those described above.

In one embodiment of the present disclosure, the third inorganic heat-resistant layer-forming slurry and the fourth inorganic heat-resistant layer-forming slurry (hereinafter also referred to as inorganic heat-resistant layer-forming slurry) each include inorganic particles and a binder polymer in a dispersion medium.

In one embodiment of the present disclosure, the dispersion medium is an aqueous dispersion medium. The aqueous dispersion medium may be water or an aqueous dispersion medium containing water. In addition, when there are limitations on the drying speed and temperature, methanol, ethanol, isopropyl alcohol, etc. having 1 to 5 carbon atoms and having a boiling point lower than that of water may be used together. In the manufacturing method, by using an aqueous dispersion medium, the particle-shaped binder polymer is dispersed while maintaining the particle shape without dissolving in the dispersion medium.

Meanwhile, in one embodiment of the present disclosure, the aqueous inorganic heat-resistant layer forming slurry and the aqueous adhesive layer forming slurry may be controlled such that the concentration of the solid content excluding the dispersion medium (or also referred to as the content of the solid content) is in a range of 20 wt% to 50 wt%.

In one embodiment of the present disclosure, there is no limitation on the method of applying the aqueous inorganic heat-resistant layer forming slurry onto at least one surface of the porous polymer substrate. For example, various methods may be used as the applying method, such as dip coating, die coating, roll coating, comma coating, microgravure coating, doctor blade coating, reverse roll coating, Mayer Bar coating, direct metering coating, or a combination thereof.

In one embodiment of the present disclosure, the drying method of the aqueous inorganic heat-resistant layer forming slurry is not limited to a specific method, and for example, one or a combination of two or more of convection drying, hot air drying, air blowing drying, and natural drying methods may be applied. The drying method may be hot air drying.

In one embodiment of the present disclosure, the drying step may be performed at a temperature of 55 °C to 68 °C. When the temperature of the drying step satisfies the above range, the limited inorganic particles may be arranged in the inorganic heat-resistant layer so as to have better durability and mechanical strength.

In one embodiment of the present disclosure, the drying step may be performed for 10 seconds to 120 seconds within the above temperature range.

Then, the third porous polymer substrate on which the third inorganic heat-resistant layer is formed and the fourth porous polymer substrate on which the fourth inorganic heat-resistant layer is formed are stacked and wound.

In one embodiment of the present disclosure, the winding step may include further stacking an interlayer film on at least one of the third inorganic heat-resistant layer and the fourth inorganic heat-resistant layer, followed by winding. The third interlayer film and the fourth interlayer film are the same as the first interlayer film and the second interlayer film, respectively, and are substituted for the aforementioned ones.

In one embodiment of the present disclosure, the third mixture may further include a third initiator and a third crosslinking agent, the fourth mixture may further include a fourth initiator and a fourth crosslinking agent, and the method may further include a step of crosslinking the third porous polymer substrate and the fourth porous polymer substrate from which the third diluent and the fourth diluent are extracted, respectively.

The third initiator and the fourth initiator are the same as the first initiator and the second initiator, respectively, and are substituted for the aforementioned ones.

The third crosslinking agent and the fourth crosslinking agent are the same as the first crosslinking agent and the second crosslinking agent, respectively, and are substituted for the aforementioned ones.

### <Electrode Assembly Manufacturing Apparatus>

The present disclosure provides an electrode assembly manufacturing apparatus including the aforementioned separator winding roll.

An electrode assembly manufacturing apparatus 100 according to one embodiment of the present disclosure may be configured to sequentially stack and wind a first electrode 14, a first separator 11, a second electrode 15, and a second separator 12 in one direction while supplying the first electrode 14, the first separator 11, the second electrode 15, and the second separator 12 in a roll-to-roll manner, in which the first separator 11 and the separator 12 are wound on one roll in an overlapped manner and then unwound and supplied in a single sheet. For example, the electrode assembly manufacturing apparatus 100 is configured to manufacture an electrode assembly using the above-mentioned overlapped and wound separators.

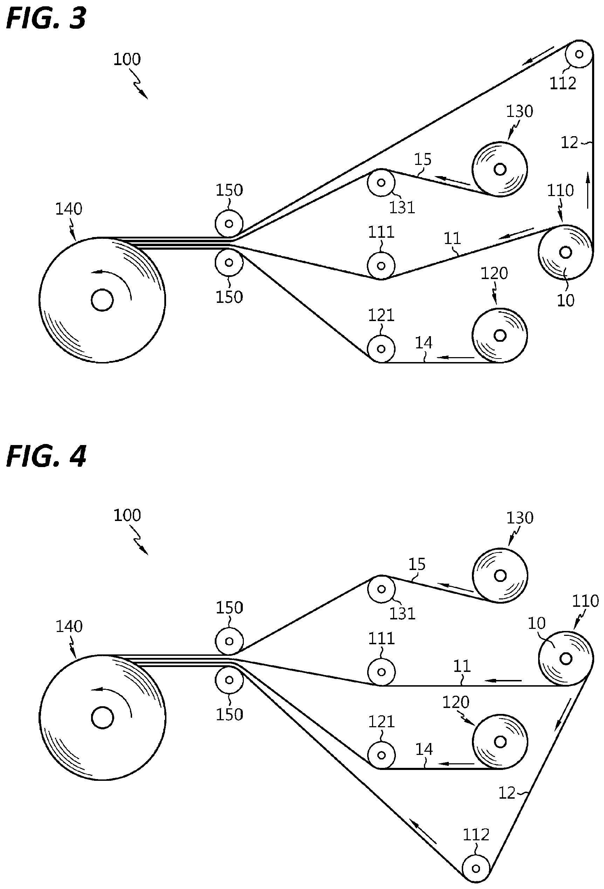

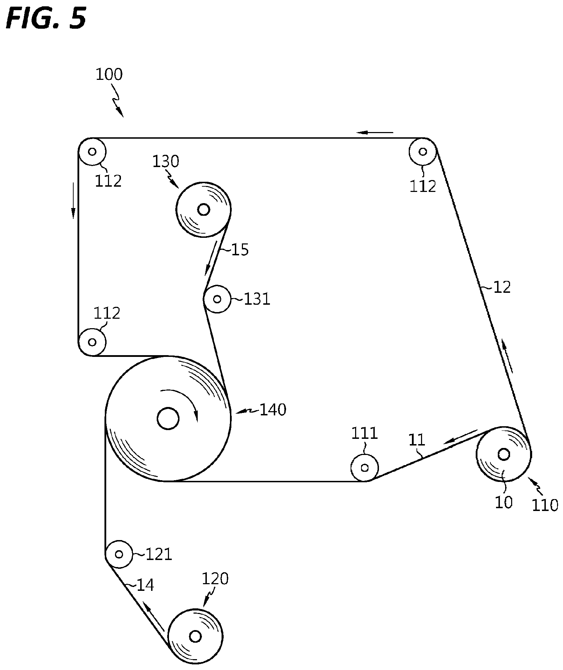

FIG. 3 schematically illustrates the structure of the electrode assembly manufacturing apparatus 100 according to one embodiment of the present disclosure. FIG. 4 schematically illustrates the structure of the electrode assembly manufacturing apparatus 100 according to another embodiment of the present disclosure. FIG. 5 schematically illustrates the structure of the electrode assembly manufacturing apparatus 100 according to still another embodiment of the present disclosure.

First, referring to FIG. 3, the electrode assembly manufacturing apparatus 100 includes a separator supply unit 110 that supplies two or more layers of separators individually separated from a separator winding roll 10 in which two or more layers of separators are stacked and wound; a first electrode supply unit 120 that supplies a first electrode 14; a second electrode supply unit 130 that supplies a second electrode 15; and a winding unit 140 that stacks and winds the individually separated separators between the first electrode 14 and the second electrode 15 and on an outer side of the first electrode 14 or the second electrode 15.

The separator supply unit 110, the first electrode supply unit 120, and the second electrode supply unit 130 may be configured to unwind and continuously supply the first separator 11, the second separator 12, the first electrode 14, and the second electrode 15 that are wound into a roll, respectively. The winding unit 140 may be configured to sequentially stack and wind the first electrode 14, the first separator 11, the second electrode 15, and the second separator 12 in one direction to be wound into a roll. Therefore, the device may be configured in a roll-to-roll manner to enable a continuous process. In this case, since the electrode assembly manufacturing apparatus 100 of the present disclosure uses one separator supply unit 110, only one replacement of the separator winding roll 10 is required when the separator is exhausted, which is advantageous for maintenance. Since only one separator supply unit 110 may be included, the process structure of the electrode assembly manufacturing apparatus 100 may be simplified. In addition, the paths of the negative electrode, positive electrode, and separator in the electrode assembly manufacturing apparatus 100 may be simplified compared to the conventional ones.

In one embodiment of the present disclosure, the winding unit 140 is a device for winding the first electrode 14, the second electrode 15, and the first and second separators 11 and 12, and is also called a mandrel. The winding unit 140 may include a core, and a motor for rotating the core. After the first electrode 14, the first and second separators 11 and 12, and the second electrode 15 are supplied, the winding unit 140 rotates, and the first electrode 14, the second electrode 15, and the separators 11 and 12 are pulled by the rotational force of the winding unit 140, so that an electrode assembly may be manufactured.

In one embodiment of the present disclosure, the first electrode 14 may be a negative electrode, and the second electrode 15 may be a positive electrode. Alternatively, the first electrode 14 may be a positive electrode, and the second electrode 15 may be a negative electrode.

The first electrode supply unit 120 supplies the first electrode 14 to the winding unit 140. To this end, the first electrode supply unit 120 may include a winding roll on which the first electrode 14 cut into a sheet shape is wound. In addition, the first electrode supply unit 120 may include other components such as a shaft and rollers required for mounting and unwinding the winding roll. The second electrode supply unit 130 supplies the second electrode 15 to the winding unit 140. To this end, the second electrode supply unit 130 may include a winding roll on which the second electrode 15 cut into a sheet shape is wound. In addition, the second electrode supply unit 130 may include other components such as a shaft and rollers required for mounting and unwinding the winding roll.

The separator supply unit 110 may be configured to individually unwind and supply the first separator 11 and the second separator 12 that are overlapped and wound into one roll. To this end, the separator supply unit 110 may include the separator winding roll 10 according to the present disclosure as described above. The separator supply unit 110 may include other components such as a shaft and rollers required for mounting the separator winding roll 10 and unwinding the separator from the separator winding roll 10. As described above, the separator winding roll 10 includes the first separator 11 and the second separator 12, and the winding unit 140 may sequentially stack and wind the first electrode 14, the first separator 11, the second electrode 15, and the second separator 12. Alternatively, the winding unit 140 may sequentially stack and wind the second separator 12, the first electrode 14, the first separator 11, and the second electrode 15.

As illustrated in FIG. 3, in the electrode assembly manufacturing apparatus 100, the first separator 11 may be positioned between the first electrode 14 and the second electrode 15, and the second separator 12 may be positioned on the outer side of the second electrode 15.

As another example, as illustrated in FIG. 4, in the electrode assembly manufacturing apparatus 100, the first separator 11 may be positioned between the first electrode 14 and the second electrode 15, and the second separator 12 may be positioned on the outer side of the first electrode 14. In other words, in the electrode assembly manufacturing apparatus 100 of FIG. 3, the second separator 12 is positioned on the outer side of the second electrode 15, whereas in the assembly manufacturing apparatus 100 of FIG. 4, the second separator 12 is positioned on the outer side of the first electrode 14.

In one embodiment of the present disclosure, as illustrated in FIG. 3 or 4, the electrode assembly manufacturing apparatus 100 may further include at least one first guide roller 111 that supples the first separator 11 supplied by unwinding the separator winding roll 10, between the first electrode 14 and the second electrode 15; and at least one second guide roller 112 that supplies the second separator 12 supplied by unwinding the separator winding roll 10 in a direction opposite to one surface of one of the first electrode 14 and the second electrode 15.

In one embodiment of the present disclosure, the path along which the first separator 11 passes from the separator supply unit 110 to the winding unit 140 is referred to as a first separator supply path, and the first separator supply path may mean a path along which the first separator 11 is unwound from the separator supply unit 110 and moves to the winding unit 140 while wrapping around the outer circumference of the first guide roller 111. The first guide roller 111 may be positioned such that the first separator 11 positioned in the first separator supply path has tension.

In one embodiment of the present disclosure, the path along which the second separator 12 passes from the separator supply unit 110 to the winding unit 140 is referred to as a second separator supply path, and the second separator supply path may mean a path along which the second separator 12 is unwound from the separator supply unit 110 and moves to the winding unit 140 through the outer circumference of the second guide roller 112. The second guide roller 112 may be positioned such that the second separator 12 positioned in the second separator supply path has tension.

In one embodiment of the present disclosure, the at least one second guide roller 112 may be arranged such that the second separator supply path extending from the separator supply unit 110 to the winding unit 140 bypasses the first electrode supply unit 120 or the second electrode supply unit 130.

For example, as illustrated in FIG. 3, the at least one second guide roller 112 may be arranged such that the second separator supply path extending from the separator supply unit 110 to the winding unit 140 bypasses the second electrode supply unit 130.

In addition, as illustrated in FIG. 4, the at least one second guide roller 112 may be arranged such that the second separator supply path extending from the separator supply unit 110 to the winding unit 140 bypasses the first electrode supply unit 120.

Further, referring to FIGS. 3 and 4, the electrode assembly manufacturing apparatus 100 may further include a first electrode guide roller 121 such that the first electrode 14 is supplied from the first electrode supply unit 120 to the winding unit 140, and may further include a second electrode guide roller 131 such that the second electrode 15 is supplied from the second electrode supply unit 130 to the winding unit 140. The first electrode guide roller 121 and the second electrode guide roller 131 may apply tension to the first electrode 14 and the second electrode 15 which are being wound, thereby reducing defects in the jelly-roll type electrode assembly.

As previously described with reference to FIG. 1, the winding length of the first separator 11 and the winding length of the second separator 12 may be the same, or the winding length of the second separator 12 may be longer than the winding length of the first separator 11.

In one embodiment of the present disclosure, when the winding length of the second separator 12 is longer than the winding length of the first separator 11, the difference between the winding length of the second separator 12 and the winding length of the first separator 11 may be equal to or longer than the difference between the length of the second separator supply path and the length of the first separator supply path. In this case, the first separator 11 and the second separator 12 may be included in the same content in the jelly-roll-shaped electrode assembly wound by the winding unit 140, and the manufacturing of the electrode assembly may not be interrupted due to a shortage of the second separator 12.

Meanwhile, in one embodiment of the present disclosure, the lengths of the first separator supply path and the second separator supply path may be different when the separator supply unit 110 is unwound while the electrode assembly manufacturing apparatus 100 is in operation, but the lengths of the first separator supply path and the second separator supply path may be defined as follows. For example, the length from the point where the first separator 11 comes into contact with (is perpendicular to) the separator winding roll 10 to the portion where the first separator 11 comes into contact with (is perpendicular to) the electrode assembly manufactured in the winding unit 140 may be the length of the first separator supply path. In this case, the first guide roller 111 must be positioned to come into contact with the first separator 11, each of the separator winding rolls 10, and the electrode assembly. The length of the second separator supply path may also be defined in the same manner.

In one embodiment of the present disclosure, the electrode assembly manufacturing apparatus 100 may further include at least one tension roller 150 to apply tension when the first electrode 14, the second electrode 15, and the separators 11 and 12 are supplied from each of the supply units 110, 120, and 130 to the winding unit 140. When the tension roller 150 is further included, the first electrode 14, the first separator 11, the second electrode 15, and the second separator 12 may be stacked without folding, thereby improving the manufacturing yield of the electrode assembly and reducing the defect rate.

Meanwhile, in one embodiment of the present disclosure, the positions of the separator supply unit 110, the first electrode supply unit 120) and the second electrode supply unit 130 in the electrode assembly manufacturing apparatus 100 may be freely modified according to the purpose. For example, as illustrated in FIG. 5, the first electrode supply unit 120 and the second electrode supply unit 130 may be positioned symmetrically with respect to the winding unit 140.

### <Electrode Assembly Manufacturing Method>

The present disclosure provides a method of manufacturing an electrode assembly. The electrode assembly manufactured in the present disclosure is a jelly-roll type electrode assembly.

The electrode assembly manufacturing method of the present disclosure includes: sequentially stacking and winding a first electrode, a first separator, a second electrode, and a second separator in one direction while supplying the first electrode, the first separator, the second electrode, and the second separator in a roll-to-roll manner, in which the first separator and the second separator are wound on one roll in an overlapped manner, and then unwound and supplied in a single sheet. For example, the electrode assembly is manufactured using the overlapped and wound separator.

The electrode assembly manufacturing method may be performed using the electrode assembly manufacturing apparatus 100 illustrated and described above in FIGS. 3 to 5.

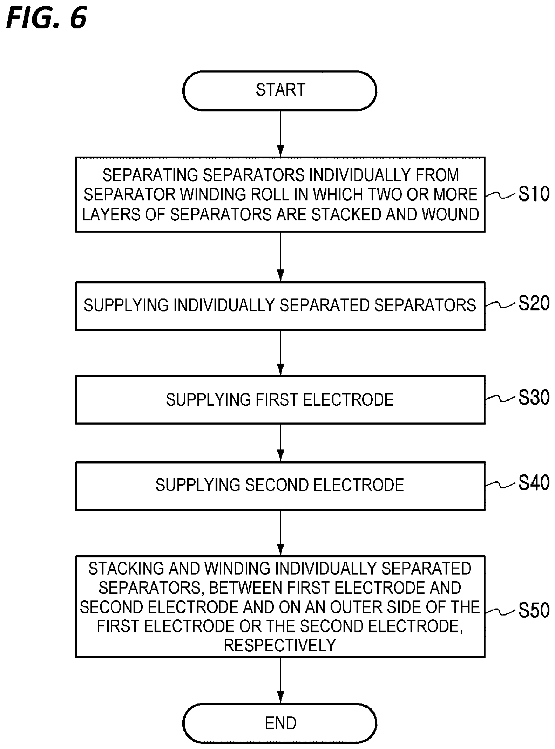

Referring to FIG. 6, an electrode assembly manufacturing method according to one embodiment of the present disclosure includes:
(S10) separating two or more layers of separators individually from a separator winding roll in which two or more layers of separators are stacked and wound;
(S20) supplying the separators individually separated in the separating;
(S30) supplying a first electrode;
(S40) supplying a second electrode; and
(S50) stacking and winding the separators individually separated in the separating, between the first electrode and the second electrode and on an outer side of the first electrode or the second electrode, respectively.

This method may also be performed using the electrode assembly manufacturing apparatus 100 illustrated and described above in FIGS. 3 to 5. The electrode assembly manufacturing method of the present disclosure utilizes a separator winding roll 10 in which two or more layers of separators are stacked and wound, which simplifies the process procedure. When the separator is exhausted, a continuous process is enabled by replacing the separator winding roll 10 once.

The step S10 of separating the two or more layers of separators individually from the separator winding roll 10 may be a step of manually separating the two or more layers of separators individually by a worker. In addition, the step S20 of supplying the individually separated separators may be a step of hanging the separated separators on the winding unit 140 manually by a worker.

In one embodiment of the present disclosure, the steps S20 to S50 may be performed simultaneously after step S10 is performed. For example, in the electrode assembly manufacturing method of the present disclosure, the step S20 of supplying the individually separated separators, the step S30 of supplying the first electrode, the step S40 of supplying the second electrode, and the step S50 of individually stacking and winding the separated separators between the supplied first electrode 14 and second electrode 15 and on an outer side of the first electrode 14 or the second electrode 15, respectively, may be performed simultaneously after the step S10 of separating the two or more layers of separators individually from a separator winding roll 10.

In one embodiment of the present disclosure, the two or more layers of separators include a first separator 11 and a second separator 12, and the step S50 may include sequentially stacking and winding the first electrode 14, the first separator 11, the second electrode 15, and the second separator 12, or sequentially stacking and winding the second separator 12, the first electrode 14, the first separator 11, and the second electrode 15.

As described above, the winding length of the first separator 11 and the winding length of the second separator 12 may be the same, or the winding length of the second separator 12 may be longer than the winding length of the first separator 11. In this case, the first separator 11 and the second separator 12 may be included in the same content in the jelly-roll-shaped electrode assembly wound by the winding unit 140, and the manufacturing of the electrode assembly may not be interrupted due to a shortage of the second separator 12.

According to one embodiment, the step S10 is performed using the separator supply unit 110, and the step S50 is performed using the winding unit 140. By using separator winding roll 10 in which the winding length of the second separator 12 is longer than the winding length of the first separator 11, the difference between the winding length of the second separator 12 and the winding length of the first separator 11 may be equal to or longer than the difference between the length of the second separator supply path and the length of the first separator supply path. In this case, the first separator 11 and the second separator 12 may be included in the same content in the jelly-roll-shaped electrode assembly wound by the winding unit 140, and the manufacturing of the electrode assembly may not be interrupted due to a shortage of the second separator 12.

Hereinafter, the present disclosure is described in more detail through Examples. However, Examples below are intended to illustrate the present disclosure, and the scope of the present disclosure is not limited thereto.

### EXAMPLE

Liquid paraffin oil (Kukdong Yuhwa, LP 350P, 68 cSt) as a first diluent and polyethylene resin (Daehan Yuhwa, VH 035) having a weight average molecular weight of 600,000 as a first polymer resin were mixed in a ratio of 3:7 and introduced into an extruder equipped with a T-die. The conveying, mixing, and extrusion were controlled at a temperature of 210 °C, and the extrusion speed was controlled at 0.37 m/min. The composition passing through the extruder was passed through a cooling casting roll maintained at 45 °C to produce a first unstretched sheet.

At the same time, liquid paraffin oil (Kukdong Yuhwa, LP 350P, 68 cSt) as a second diluent and polyethylene resin (Daehan Yuhwa, VH 035) having a weight average molecular weight of 600,000 as a second polymer resin were mixed in a ratio of 3:7 and introduced into an extruder equipped with a T-die. The conveying, mixing, and extrusion were controlled at a temperature of 210 °C, and the extrusion speed was controlled at 0.37 m/min. The composition passing through the extruder was passed through a cooling casting roll maintained at 45 °C to produce a second unstretched sheet.

The first unstretched sheet and the second unstretched sheet were stacked to prepare an unstretched stacked sheet.

The unstretched stacked sheet was biaxially stretched using a tenter-type sequential stretching machine for MD stretching (longitudinal stretching) and TD stretching (transverse stretching), and the diluent was extracted to prepare a stacked separator. The MD stretching ratio was 5 times, and the TD stretching ratio was 6 times in both cases. The stretching temperatures were 113 °C for MD and 121 °C for TD. The diluent was extracted using a methylene chloride/water mixture solution, and the extraction speed was 2 m/min.

The stacked separator was heat-set at 129 °C under the condition of stretching to 140% of the initial width and then relaxing to 120%. The heat-setting speed was 4 m/min, the thickness of the first separator and the second separator constituting the stacked separator was 10.0 µm, and the winding length was 2,000 m.

The obtained stacked separator was wound in one direction to manufacture a separator winding roll.

### Experimental Example

Among the separator winding rolls manufactured in Example above, the first separator and the second separator were separated and the air permeability and resistance characteristics were measured, which are indicated in Table 1 below.

**[Table 1]**

| | Air Permeability (sec/100 ml) | Resistance Characteristics [ohm] |
|---|---|---|
| First Separator | 62 | 0.38 |
| Second Separator | 63 | 0.38 |

The first and second separators manufactured according to Example had substantially the same air permeability and resistance characteristics.

### Measurement of Air Permeability

The separator of Example was measured using a Gurley-type air permeability meter according to JIS P-8117. The time for 100 ml of air to pass through a 28.6 mm diameter and 645 mm² area was measured.

### Measurement of Resistance Characteristics

The separator manufactured in Example was immersed in an electrolyte (ethylene carbonate (EC): diethyl carbonate (DEC) = 3:7, LiPF₆ 1.0 M), and then the AC resistance was measured. The results are indicated in Table 1 above. The AC resistance is a value measured at 1 kHz using EIS (Ametek).

Although the present disclosure has been described above by means of limited embodiments and drawings, the present disclosure is not limited thereto, and various modifications and variations are possible by those skilled in the art within the technical idea of the present disclosure and the scope of equivalents of the patent claims to be described below.

## Claims

1. A wound separator comprising two or more layers of separators stacked and wound.

2. The wound separator according to claim 1, wherein the two or more layers of separators include a first separator and a second separator, and
a winding length of the second separator is longer than a winding length of the first separator.

3. The wound separator according to claim 1, wherein the two or more layers of separators include a first separator and a second separator, and
one end of winding ends of the first separator and the second separator is wound to wrap over a remaining end so that the one end is unwound before the remaining end upon unwinding.

4. The wound separator according to claim 1, wherein the two or more layers of separators include a first separator and a second separator,
the first separator includes a first porous polymer substrate and a first inorganic heat-resistant layer including first inorganic particles and a first binder polymer on at least one surface of the first porous polymer substrate, and
the second separator includes a second porous polymer substrate and a second inorganic heat-resistant layer including second inorganic particles and a second binder polymer on at least one surface of the second porous polymer substrate.

5. The wound separator according to claim 4, further comprising an interlayer film on at least one of the first inorganic heat-resistant layer and the second inorganic heat-resistant layer.

6. A method of manufacturing a wound separator, the method comprising:
introducing a first mixture including a first diluent and a first polymer resin into an extruder, followed by extrusion and cooling to obtain a first unstretched sheet;
introducing a second mixture including a second diluent and a second polymer resin into an extruder, followed by extrusion and cooling to obtain a second unstretched sheet;
stacking the first unstretched sheet and the second unstretched sheet to obtain an unstretched stacked sheet;
first stretching the unstretched stacked sheet in a first direction to obtain a first stretched stacked sheet;
second stretching the first stretched stacked sheet in a second direction to obtain a second stretched stacked sheet;
extracting the first and second diluents from the second stretched stacked sheet to obtain a stacked separator in which a first separator and a second separator are stacked; and
winding the stacked separator obtained in the extracting.

7. The method according to claim 6, further comprising:
heat-setting the stacked separator.

8. The method according to claim 6, wherein the first mixture further includes a first initiator and a first crosslinking agent,
the second mixture further includes a second initiator and a second crosslinking agent, and
the method further comprises crosslinking the stacked separator from which the first and second diluents are extracted.

9. A method of manufacturing a wound separator, the method comprising:
introducing a third mixture including a third diluent and a third polymer resin into an extruder, followed by extrusion and cooling to obtain a third unstretched sheet;
introducing a fourth mixture including a fourth diluent and a fourth polymer resin into an extruder, followed by extrusion and cooling to obtain a fourth unstretched sheet;
first stretching the third unstretched sheet and the fourth sheet, respectively, in a first direction to obtain a first stretched third sheet and a first stretched fourth sheet;
second stretching the first stretched third sheet and the first stretched fourth sheet, respectively, in a second direction to obtain a second stretched third sheet and a second stretched fourth sheet;
extracting the third diluent and the fourth diluent from the second stretched third sheet and the second stretched fourth sheet, respectively, to obtain a third porous polymer substrate and a fourth porous polymer substrate;
applying and drying a third inorganic heat-resistant layer-forming slurry including third inorganic particles and a third binder polymer on at least one surface of the third porous polymer substrate to form a third inorganic heat-resistant layer;
applying and drying a fourth inorganic heat-resistant layer-forming slurry including fourth inorganic particles and a fourth binder polymer on at least one surface of the fourth porous polymer substrate to form a fourth inorganic heat-resistant layer; and
stacking and winding the third porous polymer substrate on which the third inorganic heat-resistant layer is formed and the fourth porous polymer substrate on which the fourth inorganic heat-resistant layer is formed.

10. The method according to claim 9, further comprising:
heat-setting the third porous polymer substrate and the fourth porous polymer substrate from which the third and fourth diluents are extracted, respectively.

11. The method according to claim 9, wherein the third mixture further includes a third initiator and a third crosslinking agent,
the fourth mixture further includes a fourth initiator and a fourth crosslinking agent, and
the method further comprises crosslinking the third porous polymer substrate and the fourth porous polymer substrate from which the third and fourth diluents are extracted, respectively.

12. The method according to claim 9, wherein the stacking and winding includes further stacking an interlayer film on at least one of the third inorganic heat-resistant layer and the fourth inorganic heat-resistant layer, followed by winding.

13. An electrode assembly manufacturing apparatus comprising:
a wound separator in which two or more layers of separators are stacked and wound;
a separator supply configured to individually separate and supply the two or more layers of separators from the wound separator;
a first electrode supply configured to supply a first electrode;
a second electrode supply configured to supply a second electrode; and
a winder configured to individually stack and wind each separator separated and supplied by the separator supply, between the first electrode and the second electrode and on an outer side of the first electrode or the second electrode.

14. The electrode assembly manufacturing apparatus according to claim 13, wherein the two or more layers of separators stacked on the wound separator include a first separator and a second separator, and
a winding length of the second separator is longer than a winding length of the first separator.

15. The electrode assembly manufacturing apparatus according to claim 13, wherein the two or more layers of separators stacked on the wound separator include a first separator and a second separator, and
one end of winding ends of the first separator and the second separator is wound to wrap over a remaining end so that the one end is unwound before the remaining end upon unwinding.

16. The electrode assembly manufacturing apparatus according to claim 13, wherein the two or more layers of separators stacked on the wound separator include a first separator and a second separator, and
the winder sequentially stacks and winds the first electrode, the first separator, the second electrode, and the second separator.

17. The electrode assembly manufacturing apparatus according to claim 16, further comprising;
at least one first guide roller configured to supply the first separator supplied by unwinding the wound separator, to a gap between the first electrode and the second electrode; and
at least one second guide roller configured to supply the second separator supplied by unwinding the wound separator, in a direction opposite to one surface of one of the first electrode and the second electrode.

18. The electrode assembly manufacturing apparatus according to claim 17, wherein the at least one second guide roller is arranged such that a second separator supply path extending from the separator supply to the winder bypasses the first electrode supply or the second electrode supply.

19. The electrode assembly manufacturing apparatus according to claim 16, wherein a winding length of the second separator is longer than a winding length of the first separator.

20. The electrode assembly manufacturing apparatus according to claim 16, wherein a winding length of the second separator is longer than a winding length of the first separator, and
a difference between the winding length of the second separator and the winding length of the first separator is equal to or longer than a difference between a length of the second separator supply path extending from the separator supply to the winder and a length of a first separator supply path extending from the separator supply to the winder.

21. A method of manufacturing an electrode assembly, the method comprising:
separating two or more layers of separators individually from a wound separator in which two or more layers of separators are stacked and wound;
supplying the separators individually separated in the separating;
supplying a first electrode;
supplying a second electrode; and
stacking and winding the separators individually separated in the separating, between the first electrode and the second electrode and on an outer side of the first electrode or the second electrode, respectively.

22. The method according to claim 21, wherein the supplying the separator, the supplying the first electrode, the supplying the second electrode, and the stacking and winding the separators are performed simultaneously after the separating the two or more layers of separators.

23. The method according to claim 21, wherein the two or more layers of separators include a first separator and a second separator, and
in the stacking and winding the separators, the first electrode, the first separator, the second electrode, and the second separator are sequentially stacked and wound.

24. The method according to claim 23, wherein a winding length of the second separator is longer than a winding length of the first separator.

25. The method according to claim 23, wherein the separating the two or more layers of separators is performed using a separator supply, and the stacking and winding the separators is performed using a winder,
a winding length of the second separator is longer than a winding length of the first separator, and
a difference between the winding length of the second separator and the winding length of the first separator is equal to or longer than a difference between a length of the second separator supply path extending from the separator supply to the winder and a length of a first separator supply path extending from the separator supply to the winder.

26. A method of manufacturing an electrode assembly, the method comprising:
sequentially stacking and winding a first electrode, a first separator, a second electrode, and a second separator in one direction while supplying the first electrode, the first separator, the second electrode, and the second separator in a roll-to-roll manner,
wherein the first separator and the second separator are wound on one roll in an overlapped manner, and then unwound and supplied in a single sheet.
